## Europäisches Patentamt

## European Patent Office

## Office européen des brevets

(19)

(11) Veröffentlichungsnummer: **0 208 253**
**B1**

(12) **EUROPÄISCHE PATENTSCHRIFT**

(45) Veröffentlichungstag der Patentschrift:
13.09.89

(51) Int. Cl.⁴: **C 02 F 3/12, C 02 F 3/10**

(21) Anmeldenummer: **86109019.9**

(22) Anmeldetag: **02.07.86**

(54) **Verfahren und Vorrichtung zur biologischen Reinigung von Abwasser.**

(30) Priorität: **03.07.85 DE 3523844**

(43) Veröffentlichungstag der Anmeldung:
**14.01.87 Patentblatt 87/3**

(45) Bekanntmachung des Hinweises auf die Patenterteilung:
**13.09.89 Patentblatt 89/37**

(84) Benannte Vertragsstaaten:
**AT CH DE FR GB IT LI NL**

(56) Entgegenhaltungen:
**FR-A-2 446 259**
**GB-A-2 032 904**
**GB-A-2 053 882**

(73) Patentinhaber: **Linde Aktiengesellschaft, Abraham-Lincoln- Strasse 21, D-6200 Wiesbaden (DE)**

(72) Erfinder: **Fuchs, Uwe, Heiterwanger Strasse 46, D-8000 München (DE)**

(74) Vertreter: **Schaefer, Gerhard, Dr., Linde Aktiengesellschaft Zentrale Patentabteilung, D-8023 Höllriegelskreuth (DE)**

EP 0 208 253 B1

**Beschreibung**

Die Erfindung betrifft ein Verfahren zur biologischen Reinigung von organische Verunreinigungen enthaltendem Abwasser, bei dem die organischen Verunreinigungen des Abwassers in einer Behandlungszone durch die Tätigkeit von Mikroorganismen gegebenenfalls unter Zufuhr eines sauerstoffhaltigen Gases abgebaut werden, zumindest ein Teil der Mikroorganismen auf Trägerteilchen aus organischen Polymerverbindungen angesiedelt wird, die Trägerteilchen nach einer Beladung mit Biomasse aus der Behandlungszone abgezogen werden, die Biomasse von den Trägerteilchen abgetrennt wird und anschließend die Trägerteilchen in die Behandlungszone zurücktransportiert werden, sowie eine Vorrichtung zur Durchführung des Verfahrens.

Sowohl für aerobe als auch anaerobe biologische Abwasserreinigungsverfahren ist es bekannt, den für den Abbau und die Umwandlung der Abwasserinhaltsstoffe in unschädliche Produkte erforderlichen Mikroorganismen Trägerteilchen als Ansiedlungsfläche zur Verfügung zu stellen, um auf diese Weise in hoher Konzentration eine hochaktive Biomasse zu erhalten und in kurzer Zeit eine möglichst hohe Reinigungsleistung zu erzielen. Solche Trägerteilchen sind in der Regel aus organischen Polymerverbindungen, wie z.B. Polyurethan oder Polyolefinen, mit offenzelliger oder retikularer Struktur gefertigt.

Um ständig eine aktive Biomasse auf und im Inneren der Trägerteilchen gewährleisten zu können, ist es außerdem bekannt, die Trägerteilchen aus der Behandlungszone abzuziehen, durch Auspressen von überschüssiger Biomasse zu befreien und anschliessend in die Behandlungszone zurückzuleiten. Beim Zusammenpressen der Trägerteilchen werden diese jedoch durch die hohen Drücke stark beansprucht, wodurch eine Verkürzung der Lebensdauer der Trägerteilchen gegeben ist.

Aus der GB-A-2 053 882 ist ein Verfahren zur biologischen Reinigung von Abwasser bekannt, bei dem das Abwasser in einem Fließbett mit auf Sand angesiedelten Mikroorganismen behandelt wird. Der Sand wird in einem nachgeschalteten Trichter von der Biomasse durch Rühren und Waschen getrennt und schließlich wieder in das Fließbett zurückgeführt.

Trägerteilchen aus organischen Polymerverbindungen, z. B. Schaumstoffteilchen, stellen aber ganz andere Anforderungen an die Regenerierung als Sand. Schaumstoff darf z. B. nicht zu hohen Scherkräften ausgesetzt werden, da er sonst zerrieben wird. Dennoch muß die Biomasse weitgehend aus den Poren des Schaumstoffs ausgewaschen werden. Durch einfache Übertragung der für Sand geeigneten Regeneriermethode auf die Regenerierung von Schaumstoffteilchen können diese spezifischen Anforderungen nicht erfüllt werden. Das Ausüben von Scherkräften auf die Trägerteilchen mittels eines Rührgerätes ist zwar für so widerstandsfähige Materialien wie Sand angebracht, Schaumstoffteilchen würden bei dieser Regeneriermethode aber zu schnell verschleißen.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise eine schonende Regenerierung der aus organischen Polymerverbindungen bestehenden Trägerteilchen erreicht werden kann.

Diese Aufgabe wird erfindungsgemäß dadurch gelöst, daß die Trägerteilchen zum Abtrennen der Biomasse in einer feststoffarmen Waschflüssigkeit durch Begasen Turbulenzen ausgesetzt werden und anschließend die Trägerteilchen mit der Waschflüssigkeit in die Behandlungszone eingeleitet werden.

Mit der Verwendung einer feststoffarmen Waschflüssigkeit und mit dem Erzeugen von Turbulenzen in der Waschflüssigkeit durch Begasen wird hinsichtlich der Feststoffe ein Konzentrationsausgleich zwischen Trägerteilchen und Waschflüssigkeit ermöglicht. Denn aufgrund der durch Begasen erzeugten Turbulenzen wird ein erheblicher Teil der in und auf den Trägerteilchen angereicherten Biomasse aus bzw. von den Trägerteilchen abgeschwemmt und geht in die feststoffarme Flüssigkeit über. Dabei werden die Trägerteilchen nur geringen mechanischen Kräften ausgesetzt, so daß eine schonende Regenerierung der Trägerteilchen möglich ist. Vor allem bei Trägerteilchen aus organischen Polymerverbindungen wird dadurch eine hohe Lebensdauer erzielt. Insbesondere für den aeroben und/oder anaeroben BSB- bzw. CSB-Abbau ist es dabei von Vorteil, als Waschflüssigkeit einen Teil des der Behandlungszone zulaufenden Abwassers zu verwenden. Das einem Belebungsbecken oder einem Anaerobreaktor zulaufende Rohabwasser wird in der Regel in einer Vorreinigungszone, wie z. B. durch einen Abwasserrechen oder einen Sandfang, von Feststoffen befreit, so daß die Feststoffaufnahmekapazität des Rohabwassers relativ groß ist. Da die Waschflüssigkeit nach einer Aufnahme von Feststoffen zusammen mit den Trägerteilchen in die Behandlungszone eingeleitet werden soll, ist dann auch eine Reinigung des als Waschflüssigkeit verwendeten Teils des zulaufenden Abwassers gewährleistet.

Als Transportmedium für die Trägerteilchen aus der Behandlungszone zur Waschflüssigkeit wird vorteilhafterweise Abwasser-Belebtschlamm-Gemisch aus der Behandlungszone verwendet. Damit kann durch ein einfaches Absaugen des Abwasser-Belebtschlamm-Gemisches aus der Behandlungszone vor dem eigentlichen Ablauf der Behandlungszone, dem zum Zurückhalten der Trägerteilchen eine Rückhalteeinrichtung zugeordnet ist, eine einfache Förderung der mit Biomasse beladenen Trägerteilchen zur Waschflüssigkeit erreicht werden. Der mit dem Absaugen verbundene Energieaufwand fällt insofern praktisch kaum ins Gewicht, als in der Behandlungszone mit der Strömung des zu behandelnden Abwassers ein Verfrachten der Trägerteilchen von der Einlaufzone zur Auslaufzone erfolgt und demzufolge die Trägerteilchen zumindest zeitweise mit Hilfe einer Fördereinrichtung vom Auslaufbereich zum Einlaufbereich zurücktransportiert werden müssen. Die Förderung der Trägerteilchen zur Waschflüssigkeit ist somit nicht als zusätzlicher Aufwand zu betrachten. Um außerdem die hydraulische Belastung der Behandlungszone reduzieren zu können, ist es weiterhin von Vorteil, aus dem

2

Transportmedium einen wesentlichen Teil des Abwasser-Belebtschlamm-Gemisches abzutrennen und einer der Behandlungszone nachgeschalteten Nachklärung zuzuleiten. Dies ist möglich, da für den Transport der Trägerteilchen aus der Behandlungszone zur Waschflüssigkeit im Vergleich zum Vorgang des Abziehens der beladenen Trägerteilchen aus der Behandlungszone nur wenig Abwasser-Belebtschlamm-Gemisch erforderlich ist.

Insbesondere bei Nitrifikationsverfahren unter Verwendung von Trägerteilchen für Nitrifikanten ist es darüber hinaus vorteilhaft, als Waschflüssigkeit einen Teil des aus der Behandlungszone abgezogenen, behandelten Abwassers zu verwenden und anschließend die von den Trägerteilchen entfernte Biomasse aus der Waschflüssigkeit abzutrennen. Da eine Nitrifikation erst nach weitgehender Oxidation der Kohlenstoffverbindungen erfolgt und niedrige Schlammbelastungen voraussetzt, sind in nitrifizierten Abwässern kaum Feststoffe enthalten. Bei Nitrifikationsverfahren kann somit das nitrifizierte Abwasser ohne weiteres als Waschflüssigkeit für mit Biomasse beladene Trägerteilchen verwendet werden, so daß kein gesondertes Transportmedium für die Trägerteilchen zur Waschflüssigkeit erforderlich ist. Um ein Abtrennen der in die Waschflüssigkeit übergegangenen Feststoffe zu erhalten, ist es in diesem Fall zweckmäßig, die Trägerteilchen aus der Waschflüssigkeit vor deren Einleiten in die Behandlungszone gesondert abzutrennen, da solchen mit Trägerteilchen arbeitenden Nitrifikationszonen im Hinblick auf die schwache Belastung und die Ansammlung der Biomasse auf den Trägerteilchen, wenn überhaupt, nur eine kleine Nachklärung nachgeschaltet ist.

Zur Erzeugung der Turbulenzen in der Waschflüssigkeit kann bei einer aeroben Behandlungszone zum BSB-Abbau oder zur Nitrifikation Luft und/oder Sauerstoff als Regeneriergas verwendet werden, während sich bei einer anaeroben Behandlungszone Stickstoff als in die Waschflüssigkeit eingeleitetes Regeneriergas empfiehlt. Bei Verwendung von Luft und/oder Sauerstoff läuft während des Abtrennens von Biomasse aus den Trägerteilchen gleichzeitig noch ein biologischer Abbau ab. Zur Erzeugung der Turbulenz sind mittel oder grobblasige Gasblasen erzeugende Gaseintragssysteme ausreichend, so daß für die Regenerierung der Trägerteilchen nur ein geringer Kostenaufwand entsteht.

Eine Vorrichtung zur Durchführung des erfindungsgemäßen Verfahrens umfaßt einen Behandlungsreaktor, in dem Trägerteilchen aus organischen Polymerverbindungen als Ansiedlungsfläche für Mikroorganismen vorhanden sind, einen Abwasserzulauf zum und einen Abwasserablauf vom Behandlungsreaktor, eine Rückhalteeinrichtung für Trägerteilchen im Behandlungsreaktor vor dem Ablauf sowie eine Fördereinrichtung von mit Biomasse beladenen Trägerteilchen aus dem Behandlungsreaktor zu einer Regeneriereinrichtung. Erfindungsgemäß ist eine solche Vorrichtung dadurch gekennzeichnet, daß die Regeneriereinrichtung ein Becken mit einer feststoffarmen Waschflüssigkeit aufweist, an das eine von der Fördereinrichtung kommende Förderleitung sowie eine mit dem Behandlungsreaktor in Verbindung stehende Ableitung für Waschflüssigkeit und Trägerteilchen angeschlossen ist und dem eine Begasungseinrichtung zum Erzeugen von Turbulenzen in der Waschflüssigkeit zugeordnet ist.

Um einen Teil des zu behandelnden Abwassers als Waschflüssigkeit verwenden zu können, weist das Becken eine Zuleitung für Waschflüssigkeit auf, die an den Abwasserzulauf zum Behandlungsreaktor angeschlossen ist.

Zur Verminderung der hydraulischen Belastung des Behandlungsreaktors ist in der Förderleitung zu dem die Waschflüssigkeit enthaltenden Becken eine Trenneinrichtung für Abwasser-Belebtschlamm-Gemisch angeordnet. In dieser Trenneinrichtung wird ein Teil des aus dem Behandlungsreaktor als Transportmedium für die Trägerteilchen abgezogenen Abwasser-Belebtschlamm-Gemisches abgetrennt und zu einer Nachklärung weitergeleitet, während der verbleibende Teil des Abwasser-Belebtschlamm-Gemisches zusammen mit den Trägerteilchen dem die Waschflüssigkeit enthaltenden Becken zugeführt wird.

Ist der Behandlungsreaktor als Nitrifikationsreaktor ausgebildet, wird dem Regenerierbecken als Waschflüssigkeit über die Fördereinrichtung zweckmäßigerweise nitrifiziertes Abwasser zugeführt. In diesem Fall ist dem Regenerierbecken in der Ableitung für Waschflüssigkeit mit Vorteil eine Feststoffabtrenneinrichtung nachgeschaltet, da bei den in der Regel schwach belasteten Nitrifikationsreaktoren bei Vorhandensein von Trägerteilchen für die Nitrifikanten keine Nachklärung für die Abtrennung von Feststoffen nachgeschaltet ist.

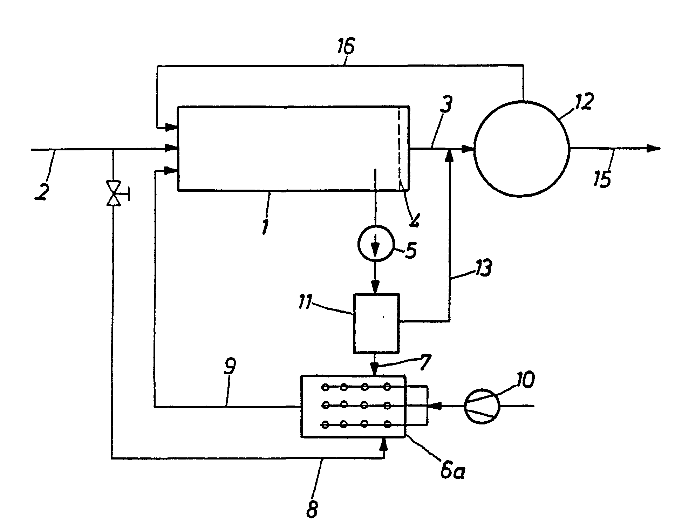

In der Zeichnung ist ein Ausführungsbeispiel einer Vorrichtung zur Durchführung des erfindungsgemäßen Verfahrens schematisch dargestellt.

Die Figur zeigt eine biologische Abwasserreinigungsanlage zum aeroben oder anaeroben Abbau organischer Abwasserinhaltsstoffe unter Verwendung von Trägerteilchen für die Mikroorganismen mit einer Regeneriereinrichtung für mit Biomasse beladene Trägerteilchen.

In der Figur ist mit 1 ein Behandlungsreaktor bezeichnet, in dem Trägerteilchen als Ansiedlungsfläche für Mikroorganismen vorhanden sind und der einen Abwasserzulauf 2 für zu behandelndes Abwasser aufweist. Vor dem Ablauf 3 ist dem Behandlungsreaktor 1 eine Rückhalteeinrichtung 4 für Trägerteilchen, die beispielsweise aus einer Sieb- oder Gitterwand gebildet sein kann, angeordnet. Der Ablauf 3 steht mit einem Nachklärbecken 12 in Verbindung, aus dem über eine Leitung 15 gereinigtes Abwasser abgeleitet und über eine Leitung 16 Belebtschlamm zum Anfangsbereich des Behandlungsreaktors 1 zurückgeleitet wird.

Der Behandlungsreaktor 1 ist entweder als aerobes Belebungsbecken mit Luft- oder Sauerstoffeintragssystemen oder als Anaerobreaktor ausgebildet. Im Behandlungsreaktor 1 sind als Trägerteilchen für Mikroorganismen Schaumstoffteilchen aus organischen Polymerverbindungen, wie z. B. Polyurethan oder Polyolefinen, mit offenzelliger oder retikularer Struktur vorhanden. Die Menge der Trägerteilchen ist dabei abhängig von der Ausbildung des Behandlungsreaktors als volldurchmischtes Belebungsbecken, als Festbettreaktor oder als Fließbettreaktor, wobei die Trägerteilchen 10 bis 90 % des Reaktorvolumens ausfüllen können.

3

Sind die Trägerteilchen aufgrund ihrer offenzelligen bzw. retikularen Struktur bis ins Innere und auch auf der äußeren Oberfläche mit Biomasse beladen, ist eine Regenerierung der Trägerteilchen unter Abtrennung eines Teils der Biomasse erforderlich. Eine vollständige Abtrennung der Biomasse ist insofern nicht zweckmäßig, als dann im Behandlungsreaktor bei Wiederverwendung der Trägerteilchen der Bewuchs mit Mikroorganismen erst allmählich einsetzt. Zur Regenerierung der Trägerteilchen ist an den Behandlungsreaktor 1 vor der Rückhalteeinrichtung 4 für Trägerteilchen eine Förderleitung 7 mit Fördereinrichtung 5 angeschlossen, über die das Abwasser-Belebtschlamm-Gemisch als Transportmedium für Trägerteilchen zusammen mit diesen einem Regenerierbecken 6a zugeführt wird, in dem eine feststoffarme Waschflüssigkeit vorhanden ist. Als feststoffarme Waschflüssigkeit wird zu behandelndes Abwasser verwendet, das über eine von der Abwasserzuleitung 2 zum Behandlungsreaktor 1 abzweigende Zuleitung 8 mit Absperrventil dem Regenerierbecken 6a zugeführt wird. In der Waschflüssigkeit werden Turbulenzen erzeugt, die ihrerseits hinsichtlich der Feststoffe einen Konzentrationsausgleich zwischen Trägerteilchen und Waschflüssigkeit bewirken. Ein erheblicher Teil der in den Trägerteilchen angereicherten Biomasse geht auf diese Weise in die feststoffarme Waschflüssigkeit über. Die Erzeugung der Turbulenzen erfolgt mittels einer Begasungseinrichtung in dem Regenerierbecken 6a, die als am Beckenboden angeordnete Fritten, gelochte Rohre, Lochböden, Düsen oder Begasungsschläuche ausgebildet sein kann. Die Begasungseinrichtung ist dabei an einen Kompressor 10 angeschlossen, über den bei einem aeroben Behandlungsreaktor 1 Luft und/ oder Sauerstoff und bei einem anaeroben Behandlungsreaktor 1 Stickstoff dem Begasungssystem zugeführt wird. Das Begasungssystem ist zweckmäßigerweise zur mittel oder grobblasigen Begasung ausgelegt, da dadurch einerseits gute Turbulenzen ermöglicht und andererseits ein geringer Energieaufwand erforderlich ist. Bei einem Lufteintrag in das Regenerierbecken 6a läuft gleichzeitig noch ein aerober Abbau ab, wodurch das Regenerierbecken 6a biologisch genutzt wird und der Behandlungsreaktor 1 entsprechend kleiner dimensioniert werden kann. Um die hydraulische Belastung des Behandlungsreaktors 1 reduzieren zu können, ist darüber hinaus in der Förderleitung 7 eine Trenneinrichtung 11 angeordnet, über die ein Teil des aus dem Behandlungsreaktor 1 abgezogenen Abwasser-Belebtschlamm-Gemisches von den Trägerteilchen abgetrennt und über eine Verbindungsleitung 13 dem Nachklärbecken 11 zugeführt wird. Die Fördereinrichtung 5 in der Förderleitung 7 kann beispielsweise als Mammutpumpe ausgebildet sein.

Bei der dargestellten Vorrichtung ist das Regenerierbecken 6a nahe des Ablaufs des Behandlungsreaktors angeordnet, so daß die Förderleitung 7 relativ kurz ausgebildet ist und die Trägermaterialförderung mit Hilfe des Abwasser-Belebtschlamm-Gemisches wenig Energieaufwand erfordert. Der Rücktransport der regenerierten Trägerteilchen sowie der von diesen abgetrennten Biomasse aus dem Regenerierbecken 6a zum Behandlungsreaktor 1 erfolgt dann über eine Verbindungsleitung 9 mit Hilfe des als Waschflüssigkeit verwendeten zu behandelnden Abwassers, das über die Zuleitung 8 in das Regenerierbecken 6a eingeleitet wird. Selbstverständlich ist es jedoch auch möglich, das Regenerierbecken dem Zulauf des Behandlungsreaktors zuzuordnen, wobei dann allerdings der Transportweg der Trägerteilchen vom Ablaufbereich des Behandlungsreaktors zum Regenerierbecken relativ lang ist und der Transport mit Hilfe von Abwasser-Belebtschlamm-Gemisch bewerkstelligt werden muß.

**Auslegungsbeispiel für Trägermaterial-Regenerierung**

Anlagengröße:                     100.000 Einwohnergleichwerte (EGW)
Volumen des Belebungsbeckens:     2500 m³
Trägermaterial-Füllung:           30 Vol.-%

**Fall 1:**

Die Trägermaterialfüllung soll innerhalb einer Woche einmal die Regenerierung durchlaufen haben. Bei einer Trägermaterialfüllung von 30 Vol.-% ergibt sich dann ein Trägermaterialdurchsatz von

$$Q_{Träger} = \frac{2.500}{7 \times 24} \times 0{,}3 = 4{,}5 \, \tfrac{m^3}{h}$$

Die Trägermaterial-Konzentration im Regenerierbecken soll 5 - 10 Vol.-% sein, d. h. es müssen 45 m³/h Rohwasser durch das Regenerierbecken geleitet werden. Bei einer Regenerierzeit von ca. 7 min ergibt sich für das Volumen des Regenerierbeckens:

$$V_{Reg.becken} = 5 \, m^3$$

Bei einem Trockensubstanzgehalt pro Trägerteilchen von $TS_W = 15 \, kg/m^3$ und 50 %-iger Regenerierung ergibt sich ein Trockensubstanzaustausch von

$$m_{TSW} = 4{,}5 \times 15 \times 0{,}5 = 34 \, kg \, TS/h$$

und eine Konzentration von Trockensubstanz im Regenerat von

$$C_{TS-Reg} = \tfrac{34}{45} = 0,75 \text{ kg/m}^3$$

**Fall 2**

Das Trägermaterial soll innerhalb eines Tages einmal regeneriert werden.
Bei einer Trägermaterialfüllung von 30 Vol.-% ergibt sich ein Trägermaterialdurchsatz von

$$Q_{Träger} = x \tfrac{2500}{24} \times 0,3 = 31 \tfrac{m^3}{h}$$

Die Trägerkonzentration im Regenerierbecken soll 10 Vol.-% betragen, d. h. es müssen 310 $\tfrac{m^3}{h}$, d. h. $\tfrac{1}{8}$ der Abwassermenge, durch das Regenerierbecken geleitet werden.
Bei einer Regenerierzeit von 6 Minuten ergibt sich ein Volumen des Regenerierbeckens von

$$V_{Reg.becken} = 30 \text{ m}^3$$

Bei einem Trockensubstanzgehalt pro Trägerteilchen von $TS_W = 12 \tfrac{kg}{m^3}$ und 50 %-iger Regeneration ergibt sich ein Trockensubstanzaustausch von

$$m_{TSW} = 31 \times 0,5 \times 12 = 186 \tfrac{kg}{h}$$

und eine Konzentration von Trockensubstanz im Regenerat von
$$C_{TS-Reg.} = \tfrac{186}{310} 0,6 \tfrac{kg}{m^3}.$$

**Patentansprüche**

1. Verfahren zur biologischen Reinigung von organische Verunreinigungen enthaltendem Abwasser, bei dem die organischen Verunreinigungen des Abwassers in einer Behandlungszone durch die Tätigkeit von Mikroorganismen gegebenenfalls unter Zufuhr eines sauerstoffhältigen Gases abgebaut werden, zumindest ein Teil der Mikroorganismen auf Trägerteilchen aus organischen Polymerverbindungen angesiedelt wird, die Trägerteilchen nach einer Beladung mit Biomasse aus der Behandlungszone abgezogen werden, Biomasse von den Trägerteilchen abgetrennt wird und anschließend die Trägerteilchen in die Behandlungszone zurücktransportiert werden, dadurch gekennzeichnet, daß die Trägerteilchen zum Abtrennen der Biomasse in einer feststoffarmen Waschflüssigkeit durch Begasen Turbulenzen ausgesetzt werden und anschließend die Trägerteilchen mit der Waschflüssigkeit in die Behandlungszone eingeleitet werden.
2. Verfahren nach Anspruch 1, dadurch gekennzeichnet, daß als Waschflüssigkeit ein Teil des der Behandlungszone zulaufenden Abwassers verwendet wird.
3. Verfahren nach Anspruch 1 oder 2, dadurch gekennzeichnet, daß als Transportmedium für die Trägerteilchen zur Waschflüssigkeit Abwasser-Belebtschlamm-Gemisch aus der Behandlungszone verwendet wird.
4. Verfahren nach Anspruch 3, dadurch gekennzeichnet, daß aus dem Transportmedium ein wesentlicher Teil des Abwasser-Belebtschlamm-Gemisches abgetrennt und einer der Behandlungszone nachgeschalteten Nachklärung zugeleitet wird.
5. Verfahren nach Anspruch 1, dadurch gekennzeichnet, daß als Waschflüssigkeit ein Teil des aus der Behandlungszone abgezogenen, behandelten Abwassers verwendet wird und daß die von den Trägerteilchen entfernte Biomasse aus der Waschflüssigkeit abgetrennt wird.
6. Vorrichtung zur Durchführung des Verfahrens nach einem der Ansprüche 1 bis 5 mit einem Behandlungsreaktor in dem Trägerteilchen aus organischen Polymerverbindungen als Ansiedlungsfläche für Mikroorganismen vorhanden sind, mit einem Abwasserablauf zum Behandlungsreaktor, einem Abwasserzulauf vom Behandlungsreaktor, einer Rückhalteeinrichtung für Trägerteilchen vor dem Ablauf und mit einer Fördereinrichtung für mit Biomasse beladenen Trägerteilchen aus dem Behandlungsreaktor zu einer Regeneriereinrichtung, dadurch gekennzeichnet, daß die Regeneriereinrichtung ein Becken (6a, 6b) mit einer feststoffarmen Waschflüssigkeit aufweist, an das eine von der Fördereinrichtung (5) kommende Förderleitung (7), sowie eine mit dem Behandlungsreaktor (1) in Verbindung stehende Ableitung (9) für Waschflüssigkeit und Trägerteilchen angeschlossen ist und dem eine Begasungs-Einrichtung (10) zum Erzeugen von Turbulenzen in der Waschflüssigkeit zugeordnet ist.
7. Vorrichtung nach Anspruch 6, dadurch gekennzeichnet, daß das Becken (6a) eine Zuleitung (8) für Waschflüssigkeit aufweist, die an den Abwasserzulauf (2) zum Behandlungsreaktor (1) angeschlossen ist.
8. Vorrichtung nach Anspruch 6 oder 7, dadurch gekennzeichnet, daß in der Förderleitung (7) zu dem Becken (6a) eine Trenneinrichtung (11) für Abwasser-Belebtschlamm-Gemisch angeordnet ist.

9. Vorrichtung nach Anspruch 8, dadurch gekennzeichnet, daß die Trenneinrichtung (11) mit einer dem Behandlungsreaktor (1) nachgeschalteten Nachkläreinrichtung (12) in Verbindung steht.

10. Vorrichtung nach Anspruch 6, dadurch gekennzeichnet, daß dem Becken (6b) in der Ableitung (9) für Waschflüssigkeit eine Feststoffabtrenneinrichtung (14) nachgeschaltet ist.

## Claims

1. A process for the biological purification of sewage containing organic impurities, in which the organic impurities of the sewage are broken down in a treatment zone by the activity of micro-organisms if necessary with the supply of a gas containing oxygen, at least a part of the micro-organisms are colonised on carrier particles made of organic polymer compounds, the carrier particles, having been charged with biomass, are withdrawn from the treatment zone, biomass is separated from the carrier particles, and the carrier particles are then returned to the treatment zone, characterised in that for the separation of the biomass the carrier particles are exposed to turbulence in a washing liquid low in solids by the supply of gas and the carrier particles, together with the washing liquid, are then introduced into the treatment zone.

2. A process as claimed in Claim 1, characterised in that a part of the sewage flowing into the treatment zone is used as washing liquid.

3. A process as claimed in Claim 1 or 2, characterised in that sewage-activated sludge mixture from the treatment zone is used as transport medium for the carrier particles to the washing liquid.

4. A process as claimed in Claim 3, characterised in that a substantial part of the sewage-activated sludge mixture is separated from the transport medium and is supplied to a secondary sedimentation tank which follows the treatment zone.

5. A process as claimed in Claim 1, characterised in that a part of the treated sewage withdrawn from the treatment zone is used as washing liquid and that the biomass removed from the carrier particles is separated from the washing liquid.

6. Apparatus for carrying out the process claimed in one of Claims 1 to 5 comprising a treatment reactor which contains carrier particles made of organic polymer compounds as colonisation surface for micro-organisms, a sewage outlet from the treatment reactor, a sewage inlet to the treatment reactor, a restraining device for carrier particles in front of the outlet and a conveying device for carrier particles charged with biomass from the treatment reactor to a regeneration device, characterised in that the regeneration device comprises a tank (6a, 6b) which contains a washing liquid low in solids and which is connected to a conveyor line (7) coming from the conveyor device (5) and a discharge line (9) for washing liquid and carrier particles connected to the treatment reactor (1), and which is provided with a gas treatment device (10) for the production of turbulence in the washing liquid.

7. A device as claimed in Claim 6, characterised in that the tank (6a) has a supply line (8) for washing liquid which is connected to the sewage inlet (2) to the treatment reactor (1).

8. A device as claimed in Claim 6 or 7, characterised in that a separating device (11) for sewage-activated sludge mixture is arranged in the conveyor line (7) to the tank (6a).

9. A device as claimed in Claim 8, characterised in that the separating device (11) is connected to a secondary sedimentation tank (12) which follows the treatment reactor (1).

10. A device as claimed in Claim 6, characterised in that the tank (6b) in the discharge pipeline (9) for washing liquid is followed by a solids separating device (14).

## Revendications

1. Procédé d'épuration biologique d'eaux usées contenant des déchets organiques, procédé selon lequel on décompose les déchets organiques des eaux usées dans une zone de traitement par l'activité de micro-organismes le cas échéant avec apport d'un gaz contenant de l'oxygène, on colonise au moins une partie des micro-organismes sur des particules de support en polmère organique, on extrait les particules de support chargées de biomasse hors de la zone de traitement, on sépare la biomasse des particules de support, puis on remet les particules de support dans la zone de traitement, procédé caractérisé en ce qu'on expose les particules de support à des turbulences engendrées par une injection de gaz pour séparer la biomasse dans un liquide de lavage propre en matières solides, puis on fait revenir les particules de support dans la zone de traitement en utilisant le liquide de lavage.

2. Installation selon la revendication 1, caractérisée en ce que le liquide de lavage est une partie des eaux usées arrivant dans la zone de traitement.

3. Installation selon la revendication 1 ou 2, caractérisée en ce qu'on utilise le mélange eaux usées/boues activées provenant de la zone de traitement comme liquide de transport des particules vers le liquide de lavage.

4. Installation selon la revendication 3, caractérisée en ce qu'on sépare une fraction importante du mélange eaux usées/boues activées du fluide de transport et on soumet cette fraction à une post-épuration en aval de la zone de traitement.

5. Installation selon la revendication 1, caractérisée en ce que le liquide de lavage est une partie des eaux usées, traitées, extraite de la zone de traitement et on sépare la biomasse enlevée des particules de support et le liquide de lavage.

6. Installation pour la mise en oeuvre du procédé selon l'une des revendications 1 à 5, comportant un réacteur de traitement contenant des particules de support en polymères organiques constituant des surfaces de colonisation de micro-organismes, le réacteur étant muni d'une évacuation d'eaux usées et d'une arrivée d'eaux usées ainsi que d'un dispositif de retenue des particules de support en amont de l'évacuation et d'un dispositif de transfert de particules de support chargées de biomasse pour les faire passer du réacteur dans une installation de régénération, installation caractérisée en ce que l'installation de régénération est un bassin (6a, 6b) contenant un liquide de lavage pauvre en matières solides, ce bassin étant relié à une conduite de transfert (7) provenant de l'installation de transfert (5) ainsi que d'une conduite d'évacuation (9) du liquide de lavage et des particules de support communiquant avec le réacteur de traitement (1) et une installation d'injection de gaz (10) pour former des turbulences dans le liquide de lavage.

7. Installation selon la revendication 6, caractérisée en ce que le bassin (6a) comporte une conduite d'alimentation (8) de liquide de lavage qui est reliée à l'arrivée d'eaux usées (2) du réacteur de traitement (1).

8. Installation selon la revendication 6 ou 7, caractérisée par une installation de séparation (11) pour le mélange eaux usées/boues activées dans la conduite de transfert (7) allant vers le bassin (6a).

9. Installation selon la revendication 8, caractérisée en ce que l'installation de séparation (11) communique avec une installation de post-épuration (12) en aval du réacteur de traitement (1).

10. Installation selon la revendication 6, caractérisée par une installation de séparation de matières solides (14) dans la conduite (9) du liquide de lavage en aval du bassin (6b).